(19) Europäisches Patentamt / European Patent Office / Office européen des brevets

(11) **EP 2 878 364 B1**

(12) **FASCICULE DE BREVET EUROPEEN**

(45) Date de publication et mention
de la délivrance du brevet:
**19.10.2016   Bulletin 2016/42**

(21) Numéro de dépôt: **14195521.1**

(22) Date de dépôt: **28.11.2014**

(51) Int Cl.:
*B01F 5/06* [(2006.01)]       *B01F 15/06* [(2006.01)]
*B05C 5/00* [(2006.01)]       *B05C 5/02* [(2006.01)]
*B05C 11/10* [(2006.01)]      *B01F 3/22* [(2006.01)]
*B29B 13/02* [(2006.01)]

(54) **Installation et procédé correspondant d'application à chaud d'une composition adhésive**

Anlage und entsprechendes Heißanwendungsverfahren einer Klebezusammensetzung

Installation and corresponding process for hot application of an adhesive composition

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **29.11.2013   FR 1361818**

(43) Date de publication de la demande:
**03.06.2015   Bulletin 2015/23**

(73) Titulaire: **BOSTIK SA
93210 La Plaine Saint Denis (FR)**

(72) Inventeur: **Chartrel, Jean-François
60400 Cuts (FR)**

(74) Mandataire: **August & Debouzy avocats
6-8 avenue de Messine
75008 Paris (FR)**

(56) Documents cités:
**US-A1- 2005 230 423**

# Description

L'invention concerne une installation d'application à chaud d'une composition adhésive comprenant un dispositif de chauffage en ligne et un procédé correspondant d'application à chaud de la composition adhésive.

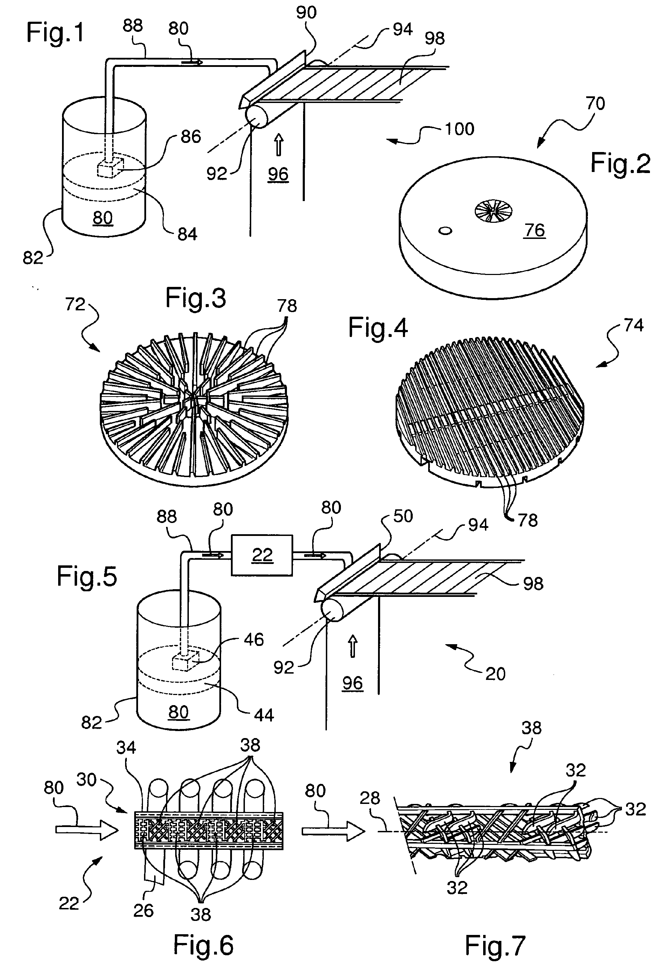

Dans l'industrie des adhésifs, des surfaces adhésives peuvent être produites par la technique de l'application à chaud de la composition adhésive sur une surface. La figure 1 montre une installation 100 selon l'art antérieur d'application à chaud d'une composition adhésive 80. Cette installation 100 comprend un réservoir 82 de stockage de la composition adhésive 80, ici sous la forme d'un fût de 200 litres. La composition adhésive 80 est destinée à être appliquée sur une surface 96, ici un film de Polyester défilant sur un cylindre 92 d'axe 94. Cette application est réalisée à l'aide d'une buse 90 d'encollage pour former une surface adhésive 98. L'alimentation de la buse en composition adhésive à appliquer 80 est réalisée à l'aide d'une ligne 88 de communication fluidique de la composition adhésive entre le fût et la buse 90, la ligne 88 étant munie d'une pompe 86 de circulation de la composition adhésive.

Pour faciliter l'application par la buse 90 et le pompage depuis le fût jusqu'à la buse 90, la composition adhésive 80, qui peut être solide à la température ambiante, est par exemple chauffée à une température de 100°C à 180°C pour présenter une viscosité suffisante. L'installation 100 comprend alors un moyen de chauffage 84 en amont de la pompe 86. Le moyen de chauffage 84 correspond par exemple à un plateau de fusion mis en contact avec la composition adhésive dans le fût. Ce plateau de fusion est chauffé électriquement par des résistances chauffantes. La quantité de chaleur communiquée du moyen de chauffage 84 à la composition adhésive 80 dépend notamment de la surface d'échange entre le moyen de chauffage 84 et la composition adhésive 80. En référence aux figures 2, 3 et 4, différentes variantes du plateau de fusion peuvent alors être envisagées, respectivement une variante 70 avec surface d'échange 76 lisse et des variantes 72 et 74 avec des surfaces d'échanges présentant des ailettes 78.

Cette installation 100 ne présente toutefois pas un fonctionnement satisfaisant dans les cas où la composition adhésive 80 à appliquer comprend un prépolymère réactif et présente une température d'application, de 100 à 120°C par exemple, trop proche d'une plage de température de réticulation, de 100°C à 140°C par exemple. En effet, une telle composition adhésive 80 chauffée dans le réservoir de stockage 82 avec une température cible de chauffage supérieure ou égale à 100°C commence à réticuler, et a fortiori en présence d'humidité. Or avec un tel moyen de chauffage 84 dans le réservoir de stockage 82, d'une part le temps de séjour de la composition adhésive 80 à 100°C est mal maîtrisé et d'autre part la température réellement appliquée est aussi mal maîtrisée. Il existe donc un risque de réticulation complète de la composition adhésive 80 au contact des ailettes 78 du moyen de chauffage 84, résultant en la formation d'un bloc compact réticulé. Un tel bloc réticulé est susceptible de boucher le plateau de fusion 72 ou 74 et d'empêcher toute circulation de composition adhésive 80 fluide jusqu'à la buse d'application 90. Ce risque d'encrassement du plateau de fusion 72 ou 74 est particulièrement aggravé pour les compositions adhésives réticulant avec l'humidité. En effet, chaque changement de fût expose les résidus de compositions adhésives sur le plateau à l'humidité de l'air renforçant alors la réticulation de ces résidus sur le plateau.

Les caractéristiques du préambule de la revendication 1 sont connues du document US 2005/0230423.

Il existe donc un besoin pour l'application d'une composition adhésive réactive présentant une température d'application proche d'une température de réticulation.

Plus particulièrement, l'invention vise à fournir une installation et un procédé d'application d'une telle composition adhésive.

A cette fin, la présente invention propose une installation d'application à chaud d'une composition adhésive sur un support, l'installation comprenant :

- une buse d'application de la composition adhésive ;
- une ligne d'alimentation de la buse avec la composition adhésive à appliquer sous forme fluide ;
- un dispositif de chauffage en ligne de la composition adhésive à une température d'application, le dispositif de chauffage comprenant :

> \* un mélangeur statique comportant un matériau conducteur électriquement, et
> \* un câble inducteur entourant le mélangeur statique.

Suivant des modes de réalisation préférés, l'invention comprend une ou plusieurs des caractéristiques suivantes :

○ L'installation comprend un réservoir de stockage comprenant la composition adhésive à appliquer, le réservoir de stockage étant relié à la ligne d'alimentation 88 de la buse d'application.

○ La composition adhésive à appliquer comprend un prépolymère réactif, réticulant dans une plage de température, la composition adhésive à appliquer 80 présentant une plage de température d'application incluse dans la plage de température de réticulation.

○ La composition adhésive à appliquer est fluide sous conditions normales de température et de pression.

○ L'installation comprend des moyens de chauffage aptes à être disposés au niveau d'un réservoir de stockage comprenant la composition adhésive à appliquer pour élever la composition adhésive à appliquer à une température de pompage.

○ L'installation comprend une pompe de circulation de la composition adhésive dans la ligne d'alimentation, la pompe étant apte à faire circuler une composition adhésive présentant une viscosité de 1000 Pa.s, de préférence de 600 Pa.s, plus préférentiellement de 500 Pa.s.

◦ Le mélangeur statique du dispositif de chauffage comprend :

- un fourreau formant portion de la ligne d'alimentation de composition adhésive, le fourreau étant réalisé en matériau isolant électriquement, de préférence en verre ou en polymère dépourvu de charges conductrices ; et
- un élément de mélange présentant des surfaces de déflexion de la composition adhésive circulant dans le fourreau, l'élément de mélange étant réalisé en matériau conducteur électriquement et disposé dans le fourreau.

◦ L'élément de mélange disposé dans le fourreau présente une densité de surfaces d'échange thermique supérieure ou égale à $5*10^3$ m$^{-1}$, de préférence comprise entre $5*10^3$ m$^{-1}$ et $10*10^3$ m$^{-1}$.

L'invention concerne en outre un procédé d'application à chaud d'une composition adhésive sur un support, le procédé comprenant :

- la fourniture de l'installation précédente d'application et d'un réservoir de stockage comprenant la composition adhésive à appliquer et relié à la ligne d'alimentation de la buse d'application ;
- la circulation de la composition adhésive depuis le réservoir de stockage jusqu'au dispositif de chauffage en ligne ;
- le chauffage de la composition adhésive pompée jusqu'à la température d'application, par l'alimentation électrique du câble inducteur du dispositif de chauffage ;
- l'application à chaud de la composition adhésive sur un support à l'aide la buse d'application.

Selon un mode de réalisation du procédé d'application à chaud, la composition adhésive est appliquée avec une viscosité de 15 Pa.s ± 5 Pa.s.

Selon un mode de réalisation du procédé d'application à chaud, la composition adhésive est appliquée à une température comprise entre 50°C et 140°, de préférence comprise entre 80°C et 120°C, plus préférentiellement entre 100°C et 110°C.

L'invention concerne encore un procédé de production d'un support adhésif réticulé, le procédé comprenant :

- la fourniture d'un support;
- l'application d'une composition adhésive sur le support à l'aide du procédé précédent ;
- la réticulation de la composition adhésive appliquée à une température comprise entre 50°C et 200°C, de préférence comprise entre 80°C et 160°C, plus préférentiellement entre 100°C et 140°C.

D'autres caractéristiques et avantages de l'invention apparaîtront à la lecture de la description qui suit de modes de réalisation de l'invention, donnés à titre d'exemple et en référence aux dessins annexés.

La figure 1 montre une installation d'application de composition adhésive selon l'art antérieur.
Les figures 2, 3 et 4 montrent différentes variantes de plateau de fusion utilisées dans l'installation de la figure 1.
La figure 5 montre une installation proposée d'application de composition adhésive comprenant un dispositif de chauffage en ligne de la composition adhésive.
La figure 6 montre une vue schématique en coupe du dispositif de chauffage en ligne de l'installation de la figure 5.
La figure 7 montre un mode de réalisation d'un élément de mélange du dispositif de la figure 6.

Il est proposé une installation d'application à chaud d'une composition adhésive, en particulier d'une composition adhésive réticulable et notamment d'une composition adhésive réticulable à la chaleur et à l'humidité. Cette composition adhésive une fois réticulée peut correspondre à une composition adhésive sensible à la pression (également connu en anglais sous l'expression "*pressure sensitive adhesive*" abrégée en *"PSA"*).

La figure 5 montre une représentation schématique d'un mode de réalisation de l'installation proposée 20. Les éléments communs aux figures 1 et 5 présentent les mêmes signes de référence. L'installation 20 proposée diffère notamment de l'installation 100 de la figure 1 en ce qu'elle comporte en ligne 88 un dispositif de chauffage 22.

Le dispositif de chauffage 22 contribue à la mise en température d'application de la composition adhésive 80. La température d'application correspond à une température où la composition adhésive à appliquer présente une viscosité suffisamment faible pour permettre l'application, autrement dit l'enduction, de la composition adhésive 80 sur la surface 96. Une température d'application de la composition adhésive 80 peut ainsi correspondre à une température où la viscosité de la composition adhésive est inférieure ou égale à 20 Pa.s, de préférence inférieure ou égale à 10 Pa.s. A titre d'exemple, la composition adhésive 80 peut présenter une viscosité de 15 ± 5 Pa.s à une température d'application de 100°C à 120°C.

Par rapport aux moyens de chauffage 84 disposés dans le réservoir de stockage 82, ici sous forme de fût, le dispositif de chauffage 22 se distingue en étant disposé en ligne 88. En d'autres termes, le dispositif de chauffage 22 réalise le chauffage de la composition adhésive 80 lorsque la composition adhésive 80 est en mouvement. Ce chauffage en mouvement, encore appelé chauffage en ligne, permet de diminuer le temps de séjour à chaud de la composition adhésive 80 par rapport à un chauffage de la composition adhésive 80 dans le réservoir de stockage 82 où la composition adhésive 80 à chaud est quasi immobile.

En permettant une réduction du temps de séjour à chaud de la composition adhésive 80, le dispositif de chauffage en ligne 22 peut effectuer la mise en température d'application de la composition adhésive 80, même dans le cas où la température d'application est incluse dans la plage de température de réticulation de la composition adhésive 80. En effet, selon la température prévue d'application incluse dans la plage de température de réticulation, le temps de séjour à chaud de la composition adhésive 80 en mouvement peut être adapté. Le temps de séjour à chaud de la composition adhésive en mouvement peut notamment être modulé avec le débit de la composition adhésive 80 et la cylindrée de ligne 88 entre le dispositif de chauffage en ligne 22 et la buse d'application 50. Par exemple, pour une composition adhésive 80 à appliquer à 100°C et présentant une plage de température de réticulation de 100°C à 120°C avec des temps de réticulation d'une à quelques minutes (sans apport additionnel d'humidité), le débit de la composition adhésive 80 en ligne peut être ajusté afin que la réaction de réticulation reste limitée pour ne pas encrasser l'installation avec de la composition adhésive réticulée. La progression de la réaction de réticulation peut être appréciée en référence au taux de conversion de la réaction de réticulation dans l'installation déterminé selon l'équation suivante :

$$(1) \qquad X = \frac{\dot{m}_0 - \dot{m}_t}{\dot{m}_0}$$

où X est le taux de conversion sans unité ;
$m_0$ est le débit massique de composition adhésive non réticulé au niveau du réservoir de stockage 82 sous forme de fût ;
$\dot{m}_t$, est le débit massique de composition adhésive non réticulé au niveau de la buse 50.

Le débit de la composition adhésive 80 en ligne peut être ainsi être ajusté pour que, selon la cinétique de réaction et selon la température, en particulier dans le mélangeur statique, le taux de conversion de la réaction de réticulation de la composition adhésive reste inférieur ou égal à 30%, de préférence inférieur ou égal à 10%. Le débit de la composition adhésive 80 dans le dispositif de chauffage en ligne est par exemple compris entre 80 g.s$^{-1}$ et 170 g.s$^{-1}$, soit environ de 5 à 10 Kg par minutes, tel que égal à 120g.s$^{-1}$, soit environ de 7 Kg par minutes.

Pour permettre une mise en température d'application de la composition adhésive 80 à un débit élevé, le dispositif de chauffage en ligne 22 présente une structure adaptée à un chauffage très efficace. La figure 6 montre une vue en coupe longitudinale d'un mode de réalisation du dispositif de chauffage en ligne 22. Pour permettre une mise en température rapide, le dispositif de chauffage en ligne 22 comporte un chauffage par induction. Ainsi, le dispositif de chauffage en ligne 22 comprend un câble inducteur 26, ici sous la forme d'un solénoïde, pour permettre la génération d'un champ magnétique.

Le dispositif de chauffage en ligne 22 comprend en outre un mélangeur statique 30 dans lequel la composition adhésive à chauffer 80 peut circuler. Les mélangeurs statiques sont notamment connus pour être utilisés dans l'industrie du moulage par injection afin d'homogénéiser la matière avant l'injection dans un moule. Les mélangeurs statiques connus de l'art antérieur comprennent des éléments de mélange présentant des surfaces de déflexion du fluide visant à obtenir un mélange homogène du fluide sur une courte distance et avec un faible cisaillement.

De façon similaire aux mélangeurs statiques connus, le mélangeur statique 30 inclus dans le dispositif de chauffage en ligne 22 comprend au moins un tel élément de mélange 38. Tel qu'illustré, le mélangeur statique présente un ensemble d'éléments de mélange 38 disposés dans un fourreau 34. Le fourreau 34 forme un conduit de circulation de la composition adhésive 80. Le fourreau 34 et l'au moins un élément de mélange 38 constitue le mélangeur statique 30 du dispositif de chauffage en ligne 22. Lorsque le dispositif de chauffage en ligne 22 est intégré à l'installation 20 de la figure 5, le fourreau 34 en tant que conduit de circulation est une portion de la ligne 88.

L'échangeur statique 30 ici formé dans le dispositif de chauffage proposé 22 présente toutefois la particularité de comporter un matériau conducteur électriquement. Dans ce document, on entend par un matériau conducteur électriquement, un matériau présentant une résistivité inférieure à 10 Ω.m, de préférence inférieur 10$^{-6}$ Ω.m. Le champ magnétique généré par le câble inducteur 26 entourant le mélangeur statique 30 est alors susceptible d'induire un courant électrique, connu sous le nom de courant de Foucault, dans le conducteur électrique du mélangeur statique 30. Les courants de Foucault induits dans le conducteur électrique entraînent un dégagement de chaleur par effet Joule qui se diffuse à la composition adhésive 80 par l'intermédiaire des composants du mélangeur statique 30.

L'efficacité de l'échange thermique de la chaleur générée entre le mélangeur statique 30 et la composition adhésive 80 dépend de la structure du fourreau et, en particulier, des éléments de mélange 38 et de leur surface utile d'échange thermique. La figure 7 montre un mode de réalisation d'un des éléments de mélange 38 du dispositif de chauffage en ligne 22. L'élément de mélange 38 présente des surfaces de déflexion 32 qui forment différents angles par rapport à la direction principale 28 de circulation de la composition adhésive 80 dans le mélangeur statique 30. Cet élément de mélange 38 présentant ces surfaces de déflexion possède alors une forte densité de surface en contact avec la composition adhésive 80 à mélanger. La densité de surface correspond à une quantité de surfaces d'échange par volume et est donc exprimé en $m^2/m^3$, i.e. en $m^{-1}$. Les éléments de mélange 38 compris dans le dispositif de chauffage en ligne 22 peuvent présenter une densité de surface supérieure ou égale à $5*10^3$ $m^{-1}$, de préférence comprise entre $5*10^3$ $m^{-1}$ et $10*10^3$ $m^{-1}$ De telles densités de surfaces correspondent par exemple à un mélangeur statique de 40 à 60 cm de long pour un diamètre de 4 à 6 cm et avec une surface utile de 5 à 10 $m^2$. Dans l'application particulière ici envisagée du mélangeur statique 30 dans le dispositif de chauffage en ligne 22, une forte densité de surface permet l'obtention d'une grande surface utile d'échange thermique entre le mélangeur statique 30 et la composition adhésive 80 circulant. En d'autres termes, les surfaces de déflexion 32 forment un échangeur thermique de structure adaptée pour la mise en température d'application rapide de la composition adhésive 80 présent dans le fourreau 34.

Notamment dans le cas où le mélangeur statique 30 du dispositif de chauffage en ligne 22 ne présenterait pas une totalité de surface d'échange suffisante, l'installation 20 peut comprendre une recirculation de la composition adhésive dans le dispositif de chauffage en ligne 22. Cette recirculation, non illustrée, peut comprendre un piquage en aval du dispositif de chauffage en ligne 22 qui renvoie la composition adhésive à l'amont du dispositif de chauffage en ligne 22, par exemple à l'aide d'une pompe de circulation. Une telle recirculation permet d'augmenter le temps de séjour de la composition adhésive dans le dispositif de chauffage en ligne 22 sans réduire le débit de l'installation 80 et sans augmenter les dimensions du mélangeur statique. Par ailleurs, une telle recirculation facilite la montée en température de l'installation lors d'un redémarrage, en permettant la circulation de la composition adhésive dans le circuit formé de la recirculation et du dispositif de chauffage en ligne 22 tant que le dispositif de chauffage en ligne 22 n'a pas encore atteint la température souhaitée.

En définitive, du fait de la circulation de la composition adhésive 80 et de la grande densité de surface d'échange, le dispositif de chauffage en ligne 22 permet la mise en température de la composition adhésive à la température d'application avec un faible temps de séjour. L'installation 20 d'application à chaud, avec la buse d'application 50, la ligne 88 d'alimentation de la buse et le dispositif de chauffage en ligne 22 peut ainsi appliquer sur la surface 96 des compositions adhésives 80 réticulables présentant une température d'application incluse dans la plage de réticulation de la composition adhésive 80 en limitant les risques de réticulation de la composition adhésive 80 en ligne 88.

L'installation d'application 20 est aussi proposée avec le réservoir de stockage 82 comprenant la composition adhésive 80 à appliquer et relié à la ligne 88 d'alimentation de la buse 50. Il est en outre proposé un procédé d'application à chaud d'une composition adhésive comprenant la fourniture d'une telle installation d'application 20. Selon ce procédé, la composition adhésive circule depuis le réservoir de stockage jusqu'au dispositif de chauffage en ligne, par exemple à l'aide d'une pompe de circulation 46. La composition adhésive 80 est alors chauffée en ligne à l'aide du dispositif de chauffage 22 du fait de l'alimentation électrique du câble inducteur 26. Le câble inducteur 26 est par exemple alimenté à l'aide d'un courant électrique à haute fréquence, de préférence supérieure ou égale à 1 MHz, telle qu'à 15 MHz. Une fois mis à la température d'application, la composition adhésive 80 est appliquée sur la surface 96 par la buse d'application 50. Selon l'exemple précédemment cité, l'application peut être réalisée avec une viscosité du fluide de 15 Pa.s $\pm$ 5 Pa.s . La température d'application peut être comprise entre 50°C et 140°C. Plus particulièrement, la température d'application peut être comprise 80°C et 120°C ou encore comprise entre 100°C et 110°C.

Le procédé d'application proposé est particulièrement avantageux lorsqu'il fait partie d'un procédé plus général de production d'un support adhésif réticulé. Un tel procédé de production d'un support adhésif réticulé est particulièrement proposé. Selon ce procédé, la surface 96 est fournie pour servir de support à l'application de la composition adhésive 80 selon le procédé d'application à chaud précédemment décrit. A la suite de l'application de la composition adhésive 80 sur la surface 96, le support enduit 98 est soumis à une température contrôlée, et avantageusement à un taux d'humidité contrôlé, pour permettre la réticulation de la composition adhésive. La température contrôlée peut être obtenue à l'aide d'un four ou d'une enceinte. La température de contrôle correspond à une température de réticulation de la composition adhésive 80 et est par exemple comprise entre 50°C et 200°C. Plus particulièrement, la température de réticulation est comprise entre 50°C et 180°C, de préférence entre 80°C et 160°C, plus préférentiellement comprise entre 100°C et 150°C ou encore comprise entre 100°C et 140°C. L'installation d'application précédemment décrite permettant l'application de la composition adhésive à chaud à une température d'application incluse dans la plage de réticulation de la composition adhésive, le procédé de production d'un support adhésif réticulé proposé est particulièrement avantageux lorsque les plages précédentes de températures d'application intersectent les plages de température de réticulation de la composition adhésive 80.

Dans l'installation proposée et aussi pour les procédés d'application à chaud et de production proposés, la composition adhésive 80 à appliquer peut particulièrement être une composition adhésive comprenant au moins un prépolymère silylé, et au moins une résine tackifiante compatible. Cette composition adhésive comprend aussi de préférence au moins un catalyseur. Plus particulièrement la composition adhésive peut comprendre :

- De 20% à 85% en poids, de préférence de 30 à 75% en poids de l'au moins un prépolymère silylé ;
- De 15 à 80% en poids, de préférence de 25 à 70% en poids de l'au moins une résine tackifiante ;
- De 0,01 à 3 % en poids, de préférence de 0,1 à 2% en poids de l'au moins un catalyseur.

La composition adhésive peut ainsi correspondre aux compositions adhésives décrites dans le document WO 2012/090151 A2, l'au moins un prépolymère silylé étant par exemple un polyuréthane ou un polyether comprenant 2 groupes terminaux de type alkoxysilane hydrolysables.

Lorsque la composition adhésive 80 est solide ou trop visqueuse sous conditions normales de températures et de pression, soit 1 bar et 20°C, il peut être aussi prévu des moyens de chauffage 44 dans le réservoir de stockage 82. Une trop grande viscosité, voire un état solide de la composition adhésive à la température ambiante peut en effet rendre difficile le pompage. Les moyens de chauffage 44 dans le réservoir de stockage 82, ici sous forme de fût, peuvent alors amener la composition adhésive à une température de pompage, c'est-à-dire à une température où la viscosité de la composition adhésive est suffisamment faible pour le pompage par la pompe de circulation 46. La pompe de circulation 46 peut typiquement être adaptée à faire circuler la composition adhésive 80 présentant une viscosité de 500 Pa.s, de préférence de 600 Pa.s. Selon un mode de réalisation particulièrement préféré, la pompe de circulation 46 peut pomper la composition adhésive 80 lorsqu'elle présente une viscosité de 1000 Pa.s. En d'autres termes, les moyens de chauffage 44 dans le réservoir de stockage permettent alors la montée en température à la température de pompage. Ces moyens de chauffage 44 sont aussi particulièrement utiles pour fondre la composition adhésive lorsque la composition adhésive est solide à température normale puis amener la composition adhésive à la température de pompage. La température de pompage de la composition adhésive 80 est par exemple une température de 40°C à 60°C. En d'autres termes, c'est le dispositif de chauffage en ligne 22 qui apporte la majeure partie de l'énergie de chauffage à la composition adhésive.

Selon un mode de réalisation préféré de l'installation proposée 20, la buse d'application 50 peut aussi être chauffée. Le chauffage de la buse 50 contribue alors à la mise en température d'application de la composition adhésive 80. Ainsi selon ce mode de réalisation, la buse 50 d'application fait partie du dispositif de chauffage 22 à la température d'application. Le chauffage de la buse 50 permet d'apporter de l'énergie thermique en fin de ligne 88 pour amener la composition adhésive à la température finale d'application. Cette température finale d'application n'étant atteinte qu'en fin de ligne 88, le temps de séjour à cette température est court, limitant alors les risques de réticulation de la composition adhésive. Toutefois la puissance de chauffage de la buse d'application 90 est relativement faible, en étant typiquement de l'ordre de 200 W. Le chauffage de la composition adhésive par l'intermédiaire du mélangeur statique 30 chauffé par induction apporte alors la plus grande contribution au chauffage à la température finale d'application, par exemple de l'ordre de 10 KW à 20KW, même si la buse 90 chauffée peut finaliser la mise en température. Selon ce mode de réalisation, le mélangeur statique 30 peut chauffer la composition adhésive 80 à une température un peu plus faible, par exemple de 10°C ou moins, que la température finale d'application. La température de la composition adhésive 80 dans le mélangeur statique 30 étant plus faible que la température d'application, la durée de réticulation à cette température est plus faible et les risques de bouchon en ligne sont alors encore diminués.

Selon un mode de réalisation préféré du dispositif de chauffage en ligne 22, le fourreau 34 est en matériau isolant. Dans ce document, on entend par matériau isolant électriquement un matériau présentant une résistivité supérieure ou égale à $10^6$ $\Omega$.m. Le matériau isolant du fourreau 34 est par exemple du verre ou un polymère dépourvu de charges conductrices. Selon ce mode de réalisation préféré, les éléments de mélange 38 sont réalisés en matériau conducteur électriquement pour permettre le chauffage par induction du mélangeur statique 30. En effet, comme indiqué précédemment, le câble inducteur 26 est susceptible, avec une alimentation électrique en courant alternatif, d'induire un courant de Foucault dans tout conducteur électrique placé dans le champ magnétique produit. Les courants de Foucault sont induits à la surface du premier conducteur placé dans le champ magnétique avec une profondeur de pénétration que l'on peut exprimer de la manière suivante :

$$(2) \qquad P = \frac{\rho}{\pi f \mu_0 \mu_r}$$

où P est la profondeur de pénétration en m ;
p est la résistivité du matériau à chauffer en $\Omega$.m ;
$f$ est la fréquence en Hz du courant alternatif alimentant le câble inducteur 26 ;
$\mu_0$ est la perméabilité du vide égale à $4\pi$* $10^{-7}$ en H.m-1;
$\mu_r$ est la perméabilité relative (sans dimension) du matériau dans lequel sont induit les courants de Foucault.

La réalisation du fourreau 34 en matériau isolant électriquement et des éléments de mélange en matériau conducteur permet alors de disposer les éléments de mélange comme premier conducteur dans le champ magnétique généré par le câble inducteur 26 entourant le fourreau 34. L'induction des courants de Foucault se réalise alors directement dans les éléments de mélange 38 au niveau des surfaces de déflexion 32, et non pas au niveau du fourreau 34 placé entre le câble inducteur et les éléments de mélange 38. La réalisation d'une induction et d'un effet Joule au niveau des surfaces de déflexion 32 permet un chauffage plus efficace de la composition adhésive 80 qui rentre en contact directement avec ces surfaces de déflexion 32, sans intermédiaire.

Selon un mode de réalisation moins avantageux, le fourreau 34 est en matériau conducteur, de sorte que l'induction de courant de Foucault ne pénètrent que le fourreau 34 et pas les éléments de mélange 38. L'effet Joule se produit alors au niveau du fourreau 34, et la chaleur se diffuse à la composition adhésive 80 par conduction grâce à l'intermédiaire des surfaces de déflexion 32. Dans ce mode de réalisation moins avantageux proposé, l'échange thermique est moins efficace du fait de l'utilisation d'un intermédiaire pour conduire la chaleur.

Le mode de réalisation préféré avec fourreau 34 isolant du dispositif de chauffage 22 est proposé pour le chauffage de tout fluide, en plus de l'utilisation pour le chauffage de la composition adhésive 80. Le dispositif de chauffage proposé 22 peut être utilisé pour le chauffage de tout fluide dans d'autre domaine que le domaine particulier de l'application de la composition adhésive 80 à chaud, tel que pour le chauffage d'une peinture par exemple. Un tel mode de réalisation du dispositif de chauffage proposé 22 permet alors un chauffage par induction amélioré en comparaison à une utilisation du chauffage par induction où seules les parois extérieures d'un moule ou d'un conduit de circulation sont chauffées par induction tel que dans les documents : JP 2001 191 364 A, JP 2001 191 380 A, JP 2005/222781 A et US 2011/0116340 A1. En particulier dans le domaine technique du traitement thermique de la nourriture, le document précité JP 2005/222781 A décrit l'utilisation d'un chauffage par induction au niveau d'une conduite de circulation, la conduite de circulation diffusant alors la chaleur par conduction à la nourriture par l'intermédiaire d'élément de mélange. L'utilisation du dispositif de chauffage proposé 22 avec mélangeur statique muni d'un fourreau 34 isolant permet un chauffage sans intermédiaire et donc plus efficace du fluide circulant dans le mélangeur statique 30.

Bien entendu, la présente invention n'est pas limitée aux exemples et aux modes de réalisation décrits et représentés, mais elle est susceptible de nombreuses variantes accessibles à l'homme de l'art dans le cadre des revendications annexées.

## Revendications

1. Installation d'application à chaud d'une composition adhésive (80) sur un support (96), l'installation (20) comprenant :

    - une buse (50) d'application de la composition adhésive (80) ;
    - une ligne (88) d'alimentation de la buse (50) avec la composition adhésive (80) à appliquer sous forme fluide ;
    - un dispositif de chauffage (22) en ligne (88) de la composition adhésive (80) à une température d'application,

    caractérisé en ce que le dispositif de chauffage (22) comprend :

    * un mélangeur statique (30) comportant un matériau conducteur électriquement, et
    * un câble inducteur (26) entourant le mélangeur statique (30).

2. Installation selon la revendication 1, comprenant un réservoir de stockage (82) comprenant la composition adhésive à appliquer (80), le réservoir de stockage (82) étant relié à la ligne d'alimentation (88) de la buse d'application (50).

3. Installation selon la revendication 2, dans laquelle la composition adhésive à appliquer (80) comprend un prépolymère réactif, réticulant dans une plage de température, la composition adhésive à appliquer (80) présentant une plage de température d'application incluse dans la plage de température de réticulation.

4. Installation selon la revendication 2 ou 3, dans laquelle la composition adhésive à appliquer (80) est fluide sous conditions normales de température et de pression.

5. Installation selon l'une des revendications 1 à 4, comprenant des moyens de chauffage (44) apte à être disposés au niveau d'un réservoir de stockage (82) comprenant la composition adhésive à appliquer (80) pour élever la composition adhésive à appliquer (80) à une température de pompage.

6. Installation selon l'une des revendications 1 à 5, comprenant une pompe (46) de circulation de la composition adhésive (80) dans la ligne d'alimentation (88), la pompe (46) étant apte à faire circuler une composition adhésive (80) présentant une viscosité de 1000 Pa.s, de préférence de 600 Pa.s, plus préférentiellement de 500 Pa.s.

7. Installation selon l'une des revendications 1 à 6, dans laquelle le mélangeur statique (30) du dispositif de chauffage (22) comprend :

    - un fourreau (34) formant portion de la ligne d'alimentation (88) de composition adhésive, le fourreau étant réalisé en matériau isolant électriquement, de préférence en verre ou en polymère dépourvu de charges conductrices ; et
    - un élément de mélange (38) présentant des surfaces de déflexion (32) de la composition adhésive circulant dans le fourreau (34), l'élément de mélange (38) étant réalisé en matériau conducteur électriquement et disposé dans le fourreau (34).

8. Installation selon la revendication 7, dans lequel l'élément de mélange (38) disposé dans le fourreau (34) présente une densité de surfaces d'échange thermique supérieure ou égale à 5*10$^3$ m$^{-1}$, de préférence comprise entre 5*10$^3$ m$^{-1}$ et 10*10$^3$ m$^{-1}$.

9. Procédé d'application à chaud d'une composition adhésive (80) sur un support (96), le procédé comprenant :

   - la fourniture d'une installation d'application (20) selon l'une des revendications 1 à 8 et d'un réservoir de stockage (82) comprenant la composition adhésive à appliquer (80) et relié à la ligne d'alimentation (88) de la buse d'application (50) ;
   - la circulation de la composition adhésive (80) depuis le réservoir de stockage (82) jusqu'au dispositif de chauffage (22) en ligne (88) ;
   - le chauffage de la composition adhésive pompée jusqu'à la température d'application, par l'alimentation électrique du câble inducteur (26) du dispositif de chauffage (22) ;
   - l'application à chaud de la composition adhésive (80) sur un support (96) à l'aide la buse d'application (50).

10. Procédé d'application à chaud selon la revendication 9, dans lequel la composition adhésive (80) est appliquée avec une viscosité de 15 Pa.s ± 5 Pa.s.

11. Procédé d'application à chaud selon la revendication 9 ou 10, dans lequel la composition adhésive (80) est appliquée à une température comprise entre 50°C et 140°, de préférence comprise entre 80°C et 120°C, plus préférentiellement entre 100°C et 110°C.

12. Procédé de production d'un support adhésif réticulé, le procédé comprenant :

   - la fourniture d'un support (96) ;
   - l'application d'une composition adhésive (80) sur le support (96) à l'aide du procédé selon l'une des revendications 9 à 11 ;
   - la réticulation de la composition adhésive appliquée à une température comprise entre 50°C et 200°C, de préférence comprise entre 80°C et 160°C, plus préférentiellement entre 100°C et 140°C.

**Patentansprüche**

1. Anlage zum heiß Auftragen einer Klebstoffzusammensetzung (80) auf einen Träger (96), wobei die Anlage (20) Folgendes aufweist:

   - eine Düse (50) zum Auftragen der Klebstoffzusammensetzung (80);
   - eine Leitung (88) zum Versorgen der Düse (50) mit der Klebstoffzusammensetzung (80), die in flüssiger Form aufzutragen ist;
   - eine Vorrichtung zum Heizen (22) in der Leitung (88) der Klebstoffzusammensetzung (80) auf eine Auftragungstemperatur, **dadurch gekennzeichnet, dass** diese Vorrichtung zum Heizen (22) Folgendes aufweist:

      * einen statischen Mischer (30), der ein elektrisch leitendes Material aufweist, und
      * ein Induktionskabel (26), das den statischen Mischer (30) umgibt.

2. Anlage nach Anspruch 1, umfassend einen Vorratsbehälter (82), der die aufzutragende Klebstoffzusammensetzung (80) aufweist, wobei der Vorratsbehälter (82) mit der Leitung zum Versorgen (88) der Düse zum Auftragen (50) verbunden ist.

3. Anlage nach Anspruch 2, wobei die aufzutragende Klebstoffzusammensetzung (80) ein reaktives Prepolymer umfasst, das in einem Temperaturbereich vernetzt, wobei die aufzutragende Klebstoffzusammensetzung (80) einen Auftragungstemperaturbereich aufweist, der in dem Vernetzungstemperaturbereich liegt.

4. Anlage nach Anspruch 2 oder 3, wobei die aufzutragende Klebstoffzusammensetzung (80) unter normalen Temperatur- und Druckbedingungen flüssig ist.

5. Anlage nach einem der Ansprüche 1 bis 4, umfassend Heizmittel (44), die geeignet sind, an einem Vorratsbehälter (82), der die aufzutragende Klebstoffzusammensetzung (80) aufweist, angeordnet zu werden, um die aufzutragende Klebstoffzusammensetzung (80) auf eine Pumptemperatur zu erhitzen.

6. Anlage nach einem der Ansprüche 1 bis 5, umfassend eine Pumpe (46) zum Zirkulieren der Klebstoffzusammensetzung (80) in der Leitung zum Versorgen (88), wobei die Pumpe (46) geeignet ist, eine Klebstoffzusammensetzung (80) zirkulieren zu lassen, die eine Viskosität von 1.000 Pa·s, vorzugsweise von 600 Pa·s, insbesondere von 500 Pa·s aufweist.

**7.** Anlage nach einem der Ansprüche 1 bis 6, wobei der statische Mischer (30) der Vorrichtung zum Heizen (22) Folgendes aufweist:

- eine Hülse (34), die einen Abschnitt der Leitung zum Versorgen (88) der Klebstoffzusammensetzung bildet, wobei die Hülse aus elektrisch isolierendem Material, vorzugsweise aus Glas oder Polymer, ohne leitende Füllstoffe hergestellt ist; und
- ein Mischelement (38), das Flächen zum Ablenken (32) der Klebstoffzusammensetzung aufweist, die in der Hülse (34) zirkuliert, wobei das Mischelement (38) aus elektrisch leitendem Material hergestellt und in der Hülse (34) angeordnet ist.

**8.** Anlage nach Anspruch 7, wobei das Mischelement (38), das in der Hülse (34) angeordnet ist, eine Dichte von Wärmeaustauschflächen aufweist, die höher als oder gleich $5*10^3$ m$^{-1}$ ist, vorzugsweise zwischen $5*10^3$ m$^{-1}$ und $10*10^3$ m$^{-1}$ beträgt.

**9.** Verfahren zum heiß Auftragen einer Klebstoffzusammensetzung (80) auf einen Träger (96), wobei das Verfahren Folgendes aufweist:

- das Bereitstellen einer Anlage zum Auftragen (20) nach einem der Ansprüche 1 bis 8 und eines Vorratsbehälters (82), der die aufzutragende Klebstoffzusammensetzung (80) aufweist und mit der Leitung zum Versorgen (88) der Düse zum Auftragen (50) verbunden ist;
- das Zirkulieren der Klebstoffzusammensetzung (80) von dem Vorratsbehälter (82) bis zu der Heizvorrichtung (22) in der Leitung (88);
- das Heizen der gepumpten Klebstoffzusammensetzung bis zu der Auftragungstemperatur durch die Stromversorgung des Induktionskabels (26) der Heizvorrichtung (22);
- das heiß Auftragen der Klebstoffzusammensetzung (80) auf einen Träger (96) mit Hilfe der Düse zum Auftragen (50).

**10.** Verfahren zum heiß Auftragen nach Anspruch 9, wobei die Klebstoffzusammensetzung (80) mit einer Viskosität von 15 Pa·s $\pm$ 5 Pa·s aufgetragen wird.

**11.** Verfahren zum heiß Auftragen nach Anspruch 9 oder 10, wobei die Klebstoffzusammensetzung (80) bei einer Temperatur aufgetragen wird, die zwischen 50 °C und 140 °C, vorzugsweise zwischen 80 °C und 120 °C, insbesondere zwischen 100 °C und 110 °C beträgt.

**12.** Verfahren zur Herstellung eines vernetzten Klebstoffträgers, wobei das Verfahren Folgendes aufweist:

- das Bereitstellen eines Trägers (96);
- das Auftragen einer Klebstoffzusammensetzung (80) auf den Träger (96) mit Hilfe des Verfahrens nach einem der Ansprüche 9 bis 11;
- das Vernetzen der Klebstoffzusammensetzung, die bei einer Temperatur aufgetragen wird, die zwischen 50 °C und 200 °C, vorzugsweise zwischen 80 °C und 160 °C, insbesondere zwischen 100 °C und 140 °C beträgt.

**Claims**

**1.** A system for hot application of an adhesive composition (80) on a support (96), the system (20) comprising:

- an application nozzle (50) for applying the adhesive composition (80);
- a supply line (88) for supplying the nozzle (50) with the adhesive composition (80) to be applied in fluid form;
- an in-line (88) heating device (22) for heating the adhesive composition (80) to an application temperature,

**characterized in that** the heating device (22) comprises:

• a static mixer (30) including an electrically conducting material, and
• an inductive cable (26) surrounding the static mixer (30).

**2.** The system according to claim 1, comprising a storage reservoir (82) comprising the adhesive composition to be applied (80), the storage reservoir (82) being connected to the supply line (88) of the application nozzle (50).

**3.** The system according to claim 2, wherein the adhesive composition to be applied (80) comprises a reactive pre-polymer, crosslinking in a temperature range, the adhesive composition to be applied (80) having an application temperature range included in the crosslinking temperature range.

**4.** The system according to claim 2 or 3, in which the adhesive composition to be applied (80) is fluid under standard conditions of temperature and pressure.

**5.** The system according to one of claims 1 to 4, comprising heating means (44) able to be positioned at a storage reservoir (82) comprising the adhesive composition to be applied (80) for raising the adhesive composition to be applied (80) to a pumping temperature.

**6.** The system according to one of claims 1 to 5, comprising a pump (46) for circulating the adhesive composition (80) in the supply line (88), the pump (46) being able to circulate an adhesive composition (80) having a viscosity of 1,000 Pa.s, preferably 600 Pa.s, more preferably 500 Pa.s.

**7.** The system according to one of claims 1 to 6, wherein the static mixer (30) of the heating device (22) comprises:

- a sheath (34) forming a portion of the supply line (88) for supplying the adhesive composition, the sheath being made in an electrically insulating material, preferably in glass or in polymer without any conductive fillers; and
- a mixing element (38) having deflective surfaces (32) for deflecting the adhesive composition circulating in the sheath (34), the mixing element (38) being made in an electrically conducting material and positioned in the sheath (34).

**8.** The system according to claim 7, wherein the mixing element (38) positioned in the sheath (34) has a heat exchange surface density greater than or equal to $5*10^3$ m$^{-1}$ preferably comprised between $5*10^3$ m$^{-1}$ and $10*10^3$ m$^{-1}$.

**9.** A method for hot application of an adhesive composition (80) on a support (96), the method comprising:

- providing an application system (20) according to one of claims 1 to 8 and a storage reservoir (82) comprising the adhesive composition to be applied (80) and connected to the supply line (88) of the application nozzle (50);
- circulating the adhesive composition (80) from the storage reservoir (82) to the in-line (88) heating device (22);
- heating the pumped adhesive composition to the application temperature, by the supply of electric power to the inductive cable (26) of the heating device (22);
- hot application of the adhesive composition (80) on a support (96) by means of the application nozzle (50).

**10.** The hot application method according to claim 9, wherein the adhesive composition (80) is applied with a viscosity of 15 Pa.s ± 5 Pa.s.

**11.** The hot application method according to claim 9 or 10, wherein the adhesive composition (80) is applied at a temperature comprised between 50°C and 140°C, preferably comprised between 80°C and 120°C, more preferably between 100°C and 110°C.

**12.** A method for producing a crosslinked adhesive support, the method comprising:

- providing a support (96);
- applying an adhesive composition (80) onto the support (96) by means of the method according to one of claims 9 to 11;
- crosslinking the adhesive composition applied at a temperature comprised between 50°C and 200°C, preferably comprised between 80°C and 160°C, more preferably between 100°C and 140°C.

Fig.1

Fig.2

Fig.3

Fig.4

Fig.5

Fig.6

Fig.7

**RÉFÉRENCES CITÉES DANS LA DESCRIPTION**

**Documents brevets cités dans la description**

- US 20050230423 A
- WO 2012090151 A2
- JP 2001191364 A
- JP 2001191380 A
- JP 2005222781 A
- US 20110116340 A1